# EUROPEAN PATENT SPECIFICATION

(11) **EP 0 366 499 B1**
(45) Date of publication and mention of the grant of the patent: **14.12.1994**
(21) Application number: 89311145.0
(22) Date of filing: 27.10.1989
(51) Int. Cl.: G02F 1/1347, H04N 9/31, G02F 1/137, G02F 1/133

(54) **Liquid crystal display device**
Flüssigkristall-Anzeigevorrichtung
Dispositif d'affichage à cristaux liquides

(30) Priority: 28.10.1988 JP 274095/88; 05.12.1988 JP 307113/88
(43) Date of publication of application: 02.05.1990
(73) Proprietor: SHARP KABUSHIKI KAISHA, Osaka 545 (JP)
(72) Inventor: Yamamoto, Kunihiko, Kitakatsuragi-gun Nara-ken (JP); Ishii, Yutaka, Nara-shi Nara-ken (JP)
(74) Representative: Jones, Colin

(56) References cited:
- EP-A- 0 284 372
- DE-A- 2 844 572
- FR-A- 2 561 020
- SID 1986 DIGEST, pages 375-378; S. MOROZUMI et al.: "LCD full-color video projector"

## Description

The present invention relates to a liquid crystal display device for displaying a great deal of character information and various kinds of images. More particularly, it relates to a projection type liquid crystal display device having a plurality of twisted nematic type liquid crystal layers for displaying images by projecting light through each liquid crystal layer onto a screen.

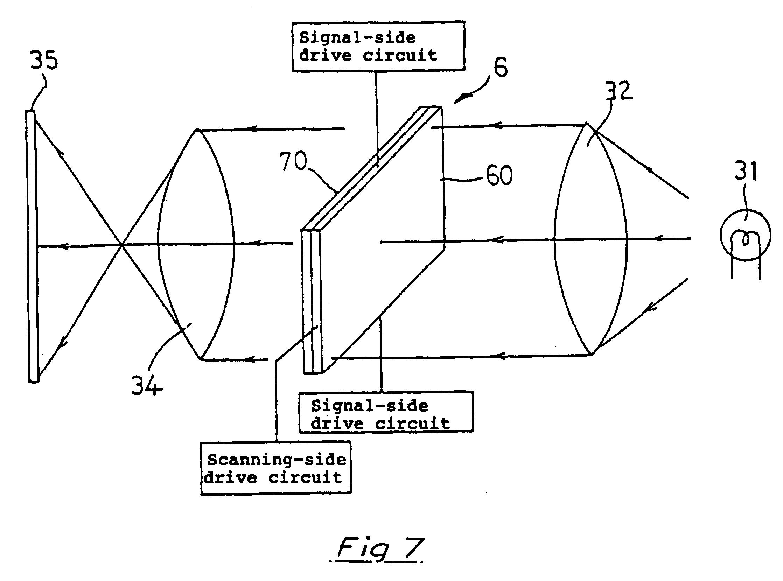

A projection type liquid crystal display device in which a plurality of twisted nematic type liquid crystal panels is used has been developed as a liquid crystal display device for displaying a great deal of character information and various kinds of images. Fig. 7 shows the structure of such a conventional projection type liquid crystal display device, which comprises a liquid crystal display element 6 composed of a pair of laminated liquid crystal panels 60 and 70. Light emitted form a light source 31 is rendered parallel by light-converging lens 32 and projected onto the liquid crystal panel 60. The light passes through and is modulated into a given display pattern by the liquid crystal panel 60 and penetrates the other liquid crystal panel 70 to be projected onto a screen 35 by the projecting lens 34, so that a given image can be displayed on the screen 35.

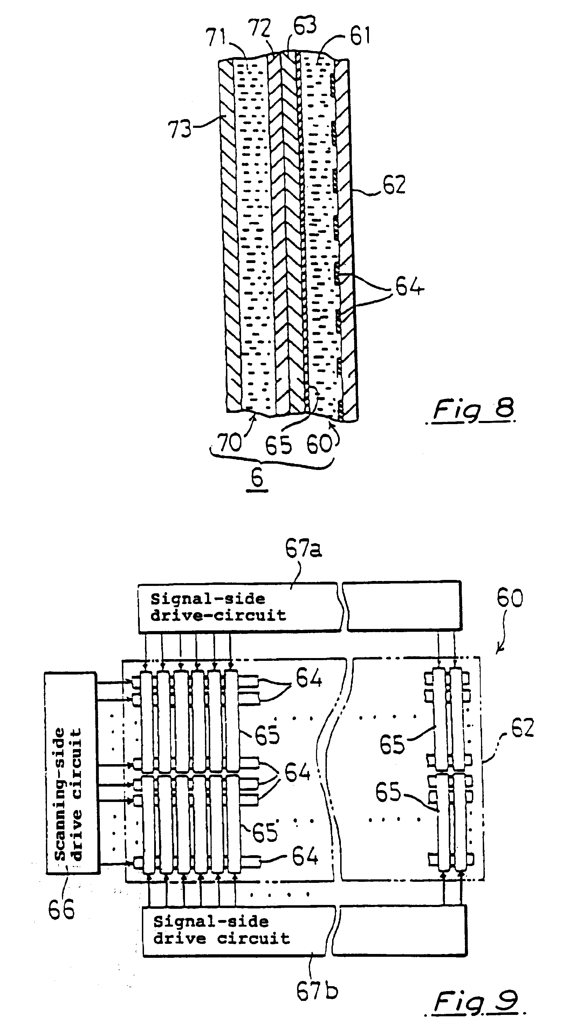

In the liquid crystal panel 60 which is located at the side towards the light source 31, a twisted nematic type liquid crystal layer 61 is sandwiched between a pair of substrates 62 and 63 as shown in Fig. 8. In the other liquid crystal panel 70 located at the side towards the screen 35, a twisted nematic type liquid crystal layer 71 is likewise sandwiched between a pair of substrates 72 and 73. The liquid crystal layer 61 in the liquid crystal panel 60 at the side towards the light source 31 is of STN (supertwisted nematic) type or SBE (Supertwisted Birefringence Effect) type, wherein the twist angles of the liquid crystal molecules are about 180 to 270 degrees. The liquid crystal molecules of the liquid crystal layer 71 in the other liquid crystal panel 70 at the side towards the screen 35 is of STN type or SBE type, wherein the rotation direction of twist of the liquid crystal molecules is opposite to that of the liquid crystal molecules in the liquid crystal layer 61 of the liquid crystal panel 60 at the side towards the light source 31.

The liquid crystal layer 61 of the liquid crystal panel 60 at the side towards the light source 31 is operated by a multiplex drive, and one substrate 62 thereof is provided with a number of transparent scanning electrodes 64 which extend in a parallel manner in a given direction, as shown in Fig. 9. Each scanning electrode 64 is connected to a scanning-side drive circuit 66, and all the scanning electrodes 64 are driven by the scanning-side drive circuit 66, A number of signal electrodes 65 is arranged on the other substrate 63 across the liquid crystal layer 61 away from the substrate 62, so that the signal electrodes 65 can be arranged at right angles to each scanning electrode 64, resulting in a matrix electrode between the signal electrode 65 and the scanning electrodes 64 placed on the other substrate 62. Each signal electrode 65 is divided into two sections in the direction of arrangement of the scanning electrodes 64. A given voltage is selectively applied to each of the divided signal electrodes 65 by means of signal-side drive circuits 67a and 67b.

On the other hand, substrates 72 and 73 on the liquid crystal panel 70 arranged at the side towards the screen 35 are not provided with such electrodes as shown in the above.

In such a liquid crystal display device, voltage is selectively applied to each scanning electrode 64 in the liquid crystal panel 60 at the side towards the light source 31 in sequence by the scanning-side drive circuit 66. Voltage is also selectively applied to the signal electrodes 65 in accordance with the display patterns by the signal-side drive circuit 67a or 67b. The light is then modulated at the portions (pixels) of the liquid crystal layer 61 corresponding to the points of intersection of both the electrodes to which voltage is applied. The light penetrates through the liquid crystal panel 60 through to the liquid crystal panel 70 at the side towards the screen 35. The liquid crystal panel 70 compensates for the coloration of the light penetrating through the liquid crystal layer 61 of the liquid crystal panel 60 at the side towards the light source 31, said coloration arising by the effect of birefringence of the liquid crystal layer 61.

Such a construction as mentioned above ensures that the scanning electrodes 64 allow scanning of four hundred lines, for instance, at a duty drive of 1/200.

In recent years, demand is for liquid crystal display devices that have pixels formed with a high density so as to increase the capacity of display.

In a conventional liquid crystal display device of the above-mentioned multiplex drive-type, in order to increase the density of pixels when the number of the scanning electrodes is increased to thereby increase the multiplex number (i.e., the number of time-sharing), description, sufficient voltage is not applied to the liquid crystal pixels and the contrast of images is lowered, or the response speed is lowered, so that the quality of the display is markedly spoiled. Such a lowering of the contrast and a lowering of the response speed can be prevented if non-linear type elements such as diodes, etc., and switching elements such as thin film transistors, etc., are added to each liquid crystal pixel. However, the ratio of opening, which is the ratio of the area of pixels to the display surface of the liquid crystal layer, is lowered, and the economical efficiency is also lowered.

The signal electrodes and the scanning electrodes are usually formed on substrates by patterning a transparent conductive film such as ITO (indium oxide). Accordingly the electrodes on a substrate become crowded if the number of scanning electrodes is increased in order to increase the density of pixels, so that the patterning itself and/or the connection of the drive circuits to the electrodes becomes difficult.

Moreover, in a direct sight type liquid crystal display device in which several liquid crystal layers having voltage-applying means respectively, are laminated there is a difference in sight between the display portions of the laminated liquid crystals. That is, this kind of display device lacks a continuity of the display portions, resulting in a lowering of the quality of display.

According to our earlier DE-A-2844572, a multi-layer matrix type liquid crystal display panel is known which has an electrode structure adapted to prevent the display dots from being overlapped with each other. The panel comprises a first (front) liquid crystal cell including a first plurality of column electrodes and a first group of row electrodes orientated substantially perpendicular to the first group of column electrodes, and a second (rear) liquid crystal cell stacked over the first cell and having a second plurality of column electrodes and a second group of row electrodes orientated substantially perpendicular to the second plurality of column electrodes. A number of the row electrodes per display pattern unit are disposed as a single family in the front cell or in the rear cell. The respective families of the row electrodes are disposed alternately in the front cell or in the rear cell, keeping the display dots within the same display pattern from being overlapped with respect to each other.

There is also already known from our earlier EP -A- 0284372 a projection type liquid crystal display comprising a liquid crystal display element having two liquid crystal panels arranged in a laminated fashion such that incident light passes through adjacent panels consecutively. Each liquid crystal panel has a supertwisted nematic type liquid crystal layer. One of the panels has two pluralities of parallel electrode lines disposed either side of its liquid crystal layer in a latticed manner so as to form pixels. The device also includes a voltage applying means for selectively applying voltage to the electrode lines to selectively modulate light transmitted through the liquid crystal layer at each pixel. The device is structured such that the rotation direction of twist of the liquid crystal layer in a first of the liquid crystal panels is opposite to that of twist of the liquid crystal layer in the other liquid crystal panel adjacent to said first liquid crystal panel, and the orientation of the liquid crystal molecules of the liquid crystal layer in the first panel in the vicinity of the liquid crystal layer in the second panel is intersected at right angles to that of the liquid crystal layer in the second panel in the vicinity of the liquid crystal layer in the first panel.

The projection type liquid crystal display device of this invention, which overcomes the above-discussed and numerous other disadvantages and deficiencies of the prior art, comprises a liquid crystal display device comprising a liquid crystal display element having two liquid crystal panels arranged in laminated fashion such that incident light passes through adjacent panels consecutively, each said liquid crystal panel having a supertwisted nematic type liquid crystal layer, one of which has two pluralities of parallel electrode lines disposed either side of its liquid crystal layer in a latticed manner so as to form pixels, and voltage applying means for selectively applying voltage to said electrode lines to selectively modulate light transmitted through said liquid crystal layer at each pixel, wherein the rotation direction of twist of the liquid crystal layer in a first liquid crystal panel is opposite to that of twist of the liquid crystal layer in a second liquid crystal panel; the orientation of the liquid crystal molecules of the liquid crystal layer in the first panel in the vicinity of the liquid crystal layer in the second panel is intersected at right angles to that of the liquid crystal layer in the second panel in the vicinity of the liquid crystal layer in the first panel, said rotation directions of twist and liquid crystal molecule orientations being such as to perform birefringence compensation substantially; wherein the second liquid crystal panel also has two pluralities of parallel electrode lines disposed either side of its liquid crystal layer in a latticed manner, one of said pluralities of parallel electrode lines of the first panel is parallel to one of said pluralities of parallel electrode lines in the second panel, and the electrode lines of said one plurality of parallel electrode lines in the first panel are not superposed on the electrode lines of said one plurality of parallel electrode lines in the second panel in the direction in which incident light passes through said liquid crystal panels.

In a preferred embodiment, the electrode lines which are disposed so as not to be superposed are closely arranged only in a given area in each panel.

In a preferred embodiment, each of the electrode lines in the first liquid crystal panel is positioned to face a respective portion between the adjacent electrode lines of the second liquid crystal panel.

In a preferred embodiment, the device is provided with only one liquid crystal display element by which images are monochromatically displayed.

In a preferred embodiment, the device is provided with three liquid crystal display elements by which images are displayed in colour.

Thus, the invention as particularly described herein makes possible the objectives of (1) providing a projection type liquid crystal display device in which electrode lines of a plurality of liquid crystal panels in the liquid crystal display elements are disposed so that they do not overlap in the direction of light transmission, so that the display capacity can be increased without increasing the amount of time-sharing and a display of high resolution and excellent contrast can be achieved; and (2) providing a projection type liquid crystal display device in which the formation of the electrodes of electrode lines and the connection of the electrode lines to the corresponding drive circuits can be easily performed, thereby causing the productivity to be remarkable increased.

The invention is further described, by way of example, with reference to the accompanying drawings, in which:-
Fig. 1 is a perspective view showing a part of the liquid crystal display element of a projection type liquid crystal display device of this invention;
Fig. 2 is a schematic diagram showing the projection type liquid crystal device to which Fig. 1 pertains;
Figs. 3a and 3b, respectively, are schematic diagrams respectively showing the arrangment of the electrode lines of a liquid crystal panel in each of the liquid crystal display elements of Fig. 1;
Figs. 4 and 4b, respectively, are a perspective view and a cross sectional view showing a part of the liquid crystal display element in another projection type liquid crystal display device of this invention;
Figs. 5a and 5b, respectively, are schematic diagrams showing the arrangement of the electrode lines of a liquid crystal panel in each of the liquid crystal display element of Figs. 4a and 4b;
Fig. 6 is a schematic diagram showing another liquid crystal display device that attains a colour display;
Fig. 7 is a schematic diagram showing a conventional projection type liquid crystal display device;
Fig. 8 is a cross sectional view showing the liquid crystal display element in the display device of Fig. 7; and
Fig. 9 is a schematic diagram showing the arrangment of electrodes of the liquid crystal panel in the display device of Fig. 7.

### Example 1

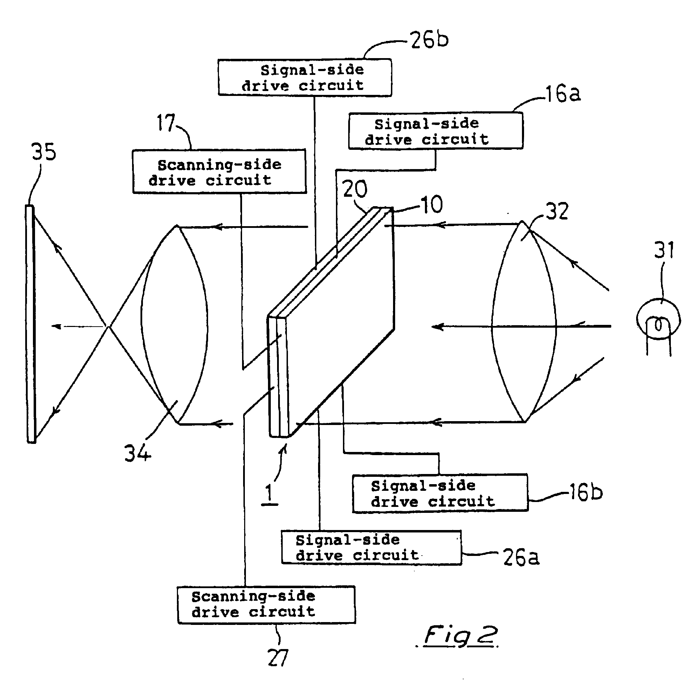

Fig. 2 shows a liquid crystal display device of this invention, which has a liquid crystal display element 1 composed of a laminate of a pair of perpendicular liquid crystal panels 10 and 20. Light emanating from a light source 31 is rendered parallel by a light-converging lens 32 and is projected on the liquid crystal display element 1. The light penetrated through the liquid crystal display element 1 is projected on a screen 35 by means of a light projecting lens 34.

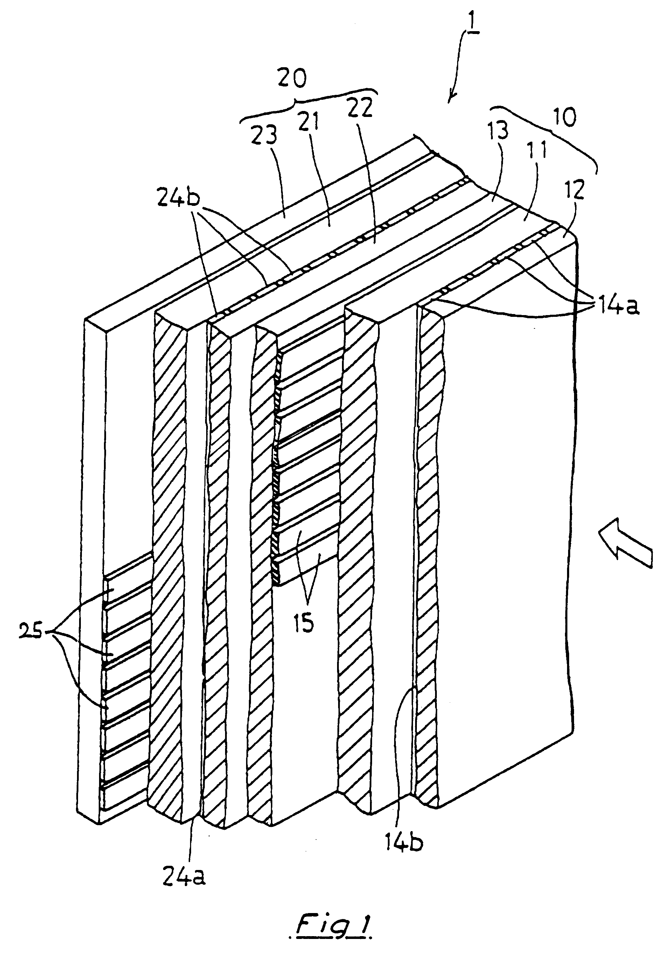

As shown in Fig. 1, the liquid crystal display element 1 is provided with a liquid crystal panel 10 perpendicularly arranged at the side towards the light source 31 and another liquid crystal panel 20 perpendicularly arranged at the side towards the screen 35. The liquid crystal panel 10 at the side towards the light source 31 has a twisted nematic type liquid crystal layer 11 which is placed between a pair of transparent substrates 12 and 13. The liquid crystal panel 20 at the side towards the screen 35 is also composed so that a twisted nematic type liquid crystal layer 21 is placed between a pair of transparent substrates 22 and 23.

The liquid crystal layer 11 of the liquid crystal panel 10 at the side towards the light source 312 is of STN type or SBE type in which the angles of twist of the liquid crystal molecules thereof are about 180 to 270 degrees. The liquid crystal layer 21 of the liquid crystal panel 20 at the side towards the screen 35 is of STN type of SBE type as well, in which the rotation direction of twist of the liquid crystal molecules thereof is opposite to the rotational direction of twist of the liquid crystal layer 11 of the liquid crystal panel 10 at the side towards the light source 31. The orientation of the liquid crystal molecules of a portion of the liquid crystal layer 11 in the vicinity of the liquid crystal layer 21 is set to be intersected at right angles to that of the liquid crystal molecules of a portion of the liquid crystal layer 21 in the vicinity of the liquid crystal layer 11. Therefore, the coloration arising by the birefringence effect of light which is transmitted through the liquid crystal layers 11 and 21 of the respective liquid crystal panels 10 and 20 is optically compensated by the liquid crystal layer of the other liquid crystal panel.

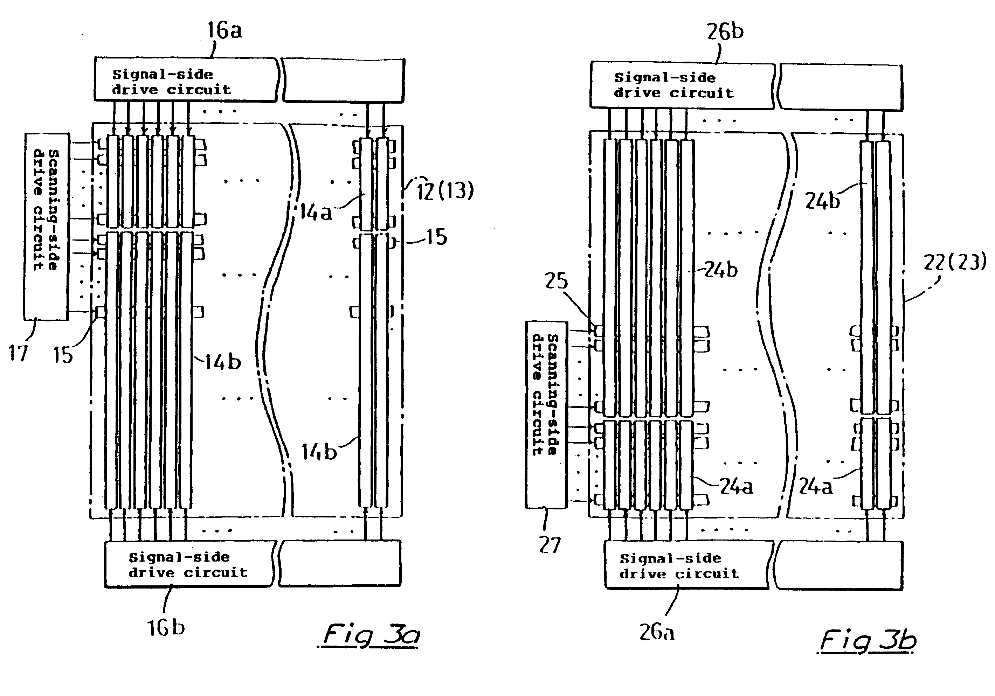

As shown in Fig. 3a, a number of transparent straight signal electrode lines 14a, 14a,... and 14b, 14b,... are disposed on the substrate 12 upon which light is incident in the liquid crystal panel 10 at the side towards the light source 31. The respective signal electrode lines 14a are disposed to be perpendicular to a parallel member in the upper area at the side of the liquid crystal layer 11 of the perpendicular substrate 12, and the other signal electrode lines 14b are disposed to be roughly perpendicular in a parallel manner in the central area and in the lower area, excluding the upper area, on the substrate 12, so that the electrode lines 14b are aligned with the signal electrode lines 14a, respectivley. Voltage is selectively applied by means of a signal-side drive circuit 16a to each of the signal electrode lines 14a in the upper area of the substrate 12 in accordance with a given display, and voltage is also selectively applied to each of the other signal electrode lines 14b by means of a signal-side drive circuit 16b in accordance with a given display.

A number of transparent, straight scanning electrode liens 15, 15, ... is disposed in a parallel manner in the upper half area at the side of the liquid crystal layer 11 of the substrate 13 and is placed at the liquid crystal layer 11 remote from the substrate 12 on which the signal electrode lines 14a and 14b are disposed, so that they can be intersected by the signal electrode lines 14a and 14b at right angles to each other. No scanning electrode lines are provided in the lower half area of the substrate 13. Voltage is selectively applied in sequence to the scanning electrode lines 15 by means of a scanning-side drive circuit 17. Voltage is applied to the portions (pixels) of the liquid crystal layer 11 facing the intersections of given portions of the scanning electrode line 15, to which voltage has been applied at the substrate 13, with given portions of the signal electrode lines 14a or 14b to which voltage has been applied at the substrate 12. Thus, the light that is transmitted to the said portions (pixels) of the liquid crystal layer 11 is modulated.

On the other hand, as shown in Fig.3b, a number of transparent, straight signal electrode lines 24a, 24a ... and 24b, 24b ... is disposed on the substrate 22 of the liquid crystal panel 20, which is at the side towards the screen 35 and on which the liquid crystal panel 10 is laminated as shown in Fig.3b, the substrate 22 being at the side of the panel 20 towards the panel 10. Each of the signal electrode lines 24a is disposed to be roughly perpendicular in a parallel manner in the lower area of the perpendicular substrate 12, and each of the signal electrode lines 24b is disposed to be roughly perpendicular in a parallel manner in the upper area and in the central area, excluding the lower area of the substrate 22, so that the signal electrode lines 24b are aligned with the signal electrode lines 24a. Voltage is selectively applied to the signal electrode lines 24a placed in the lower area of the substrate 22 by means of a signal-side drive circuit 26a in accordance with a given display. Voltage is also selectively applied to the signal electrode lines 24b by means of a signal-side drive circuit 26b in accordance with a given display.

A number of transparent, straight scanning electrode lines 25, 25,... which are intercrossed with the signal electrode lines 24a and 25b at right angles to each other are disposed in a parallel manner in the lower half area at the side of the liquid crystal layer 21 of the substrate 23 across the liquid crystal layer 21 from the substrate 22 on which the signal electrode lines 24a and 24b are disposed. None of such scanning electrode lines is disposed in the upper half area of the substrate 23. Voltage is applied to the portions (pixels) of the liquid crystal layer 21 corresponding to the intersections of given portions of the scanning electrode lines 25 in the substrate 23 and to a given portion of the signal electrode lines 24a or 24b in the substrate 22, so that the light transmitted the said intersection is modulated.

As mentioned above, the scanning electrode lines are not disposed in the portion of the liquid crystal panel 20 at the side of the screen 35 that faces the portion (the upper half area) at which the scanning electrode lines 15 are disposed. Nor in the liquid crystal panel 10 that faces the portion (the lower half area) at which the scanning electrode lines 25 are disposed in the liquid crystal panel 20. Therefore, the pixel portions to which voltage is applied in the liquid crystal layers 11 and 21 of the respective liquid crystal panels 10 and 20 do not overlap each other in the direction of light transmission.

In the above-mentioned liquid crystal display device according to this invention, voltage is applied to predetermined pixel portions in the respective liquid crystal layers 11 and 21 at each of the liquid crystal panels 10 and 20 of the liquid crystal display element 1 by means of the scanning electrode lines 15 and 25 and the signal electrode lines 14a, 14b, 24a, and 24b, so that the light transmitted to the said pixel portions is modulated. Light from the light source 31 is rendered parallel and projected on the liquid crystal display element 1 by the light converging lens 32, and the light transmitted to the given pixel portions in the liquid crystal layers 11 and 21 of the respective liquid crystal panels 10 and 20 is enlarged and projected onto the screen 35 by the projecting lens 34, resulting in a given image on the screen 35.

At the time, the pixel portions to which voltage of the liquid crystal layers 11 and 21 in each of the liquid crystal panels 10 and 20 is applied, do not overlap each other in the direction of light transmission, and accordingly the non-pixel portions of the liquid crystal layer 11 or 21 take a role to compensate the phase of light of the pixel portions of the other liquid crystal layer 21 or 11. For this reason, the coloration of the transmitted light arising by the birefringence effect which is produced in the pixel area in the upper half area of the liquid crystal layer 11 at the side towards light source 31 is optically compensated in the non-pixel area of the upper half area of the liquid crystal layer 21 at the side towards the screen 35. In the same way, the transmitted light whose coloration based on the birefringence effect in the non-pixel area of the lower half area in the liquid crystal layer 11 at the side towards the light source 31 has been optically compensated is transmitted to the pixel area in the lower half area of the liquid crystal layer 21 at the side towards the screen 35, whereby an image, whose contrast ratio is hight, is projected under magnification onto the screen 35.

At this time, the focus of the light-converging lens 32 must be set at a point between the liquid crystal panels 10 and 20, and moreover, each of the substrates 13 and 23 must be made as thin as possible so that the display of each of the liquid crystal layers cannot be observed to be indistinct with the eye. The thickness of each of the substrates is determined depending upon the focal distance and/or the aperture of the said lens. According to a display experiment of this invention, when a light-converging lens with the F number of 3.5, the focal distance of which is 150 mm (i.e., f = 150 mm), was used, a glass substrate of a thickness of 0.5 mm or less enabled a distinct, clear image to be formed. When the thicknesses of the substrates 13 and 22 is required to be thinner, these substrates 13 and 22 are formed into a single glass substrate and the signal electrodes and the scanning electrodes are then disposed, respectively, on opposite sides thereof. Instead of such a glass substrate, a film substrate made of polyester resins can be employed.

The signal electrode lines 14a, 14b, 24a and 24b and the scanning electrode lines 15 and 25 are disposed in a matrix in the liquid crystal panels 10 and 20 of the liquid crystal display element 1, respectively. The signal electrode lines 14a and 14b and the scanning electrode lines 15 of the liquid crystal panel 10 are driven by the signal-side drive circuits 16a and 16b and the scanning-side drive circuit 17, respectively, so that they have a driving system independently of the signal electrode lines 24a and 24b and the scanning electrode line 25 which are driven by the signal-side drive circuit 26a and 26b and the scanning-side drive circuit 27, respectivley, in the liquid crystal panel 20. In this way, by providing two independent systems, the scanning electrode lines 15 and 25, in a pair of liquid crystal panels 10 and 20, the multiplex number can be doubled without increasing the number of the scanning electrode lines, which makes it possible to provide a thousand lines of scanning if the liquid crystal panels 10 and 20 are driven at a duty ratio of 1/250. As a result, sufficient voltage can be applied to the liquid crystal pixels, and it is possible to enhance the density of pixels without lowering image contrast or delaying the response.

Voltage is applied by means of the scanning-side drive circuits 17 and 27, respectively, to the scanning electrodes 15 and 25 disposed in the half area of each of the corresponding substrates 13 and 23 of the liquid crystal panels 10 and 20. Therefore, it is possible to increase the display capacity without increasing the total number of the scanning lines 15 and 25 in the liquid crystal panels 10 and 20 above the total number of the scanning lines in a conventional liquid crystal display element and, without lowering the response speed. Moreover, a display of images with excellent contrast can be attained.

Although the above-mentioned embodiment only possesses a liquid crystal display element composed of a two-layered display panel, this invention is applicable to a liquid crystal display element constituted by laminating of more than two sets; a pair of liquid crystal panels in which portions where voltage-applying means are disposed, respectively, are optically compensated by the liquid crystal layers. In this case, since the voltage-applying means do not overlap each other in the direction of light transmission, as well, it is possible to increase the displaying capacity in accordance with the number of sets of the liquid crystal panels without increasing the number of the scanning electrode lines. The above-mentioned configuration can be applied not only to scanning electrode lines but also to signal electrode lines, as well as to an active matrix type liquid crystal display devices.

### Example 2

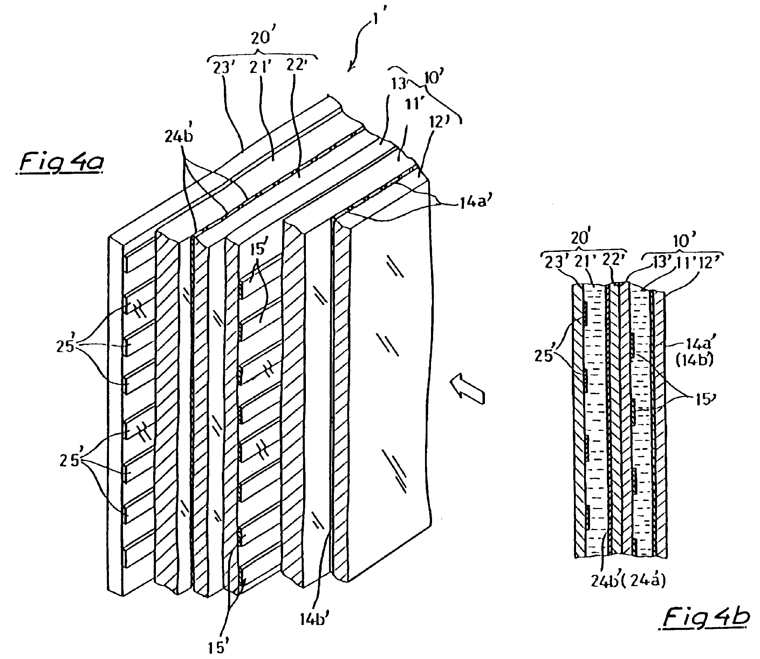

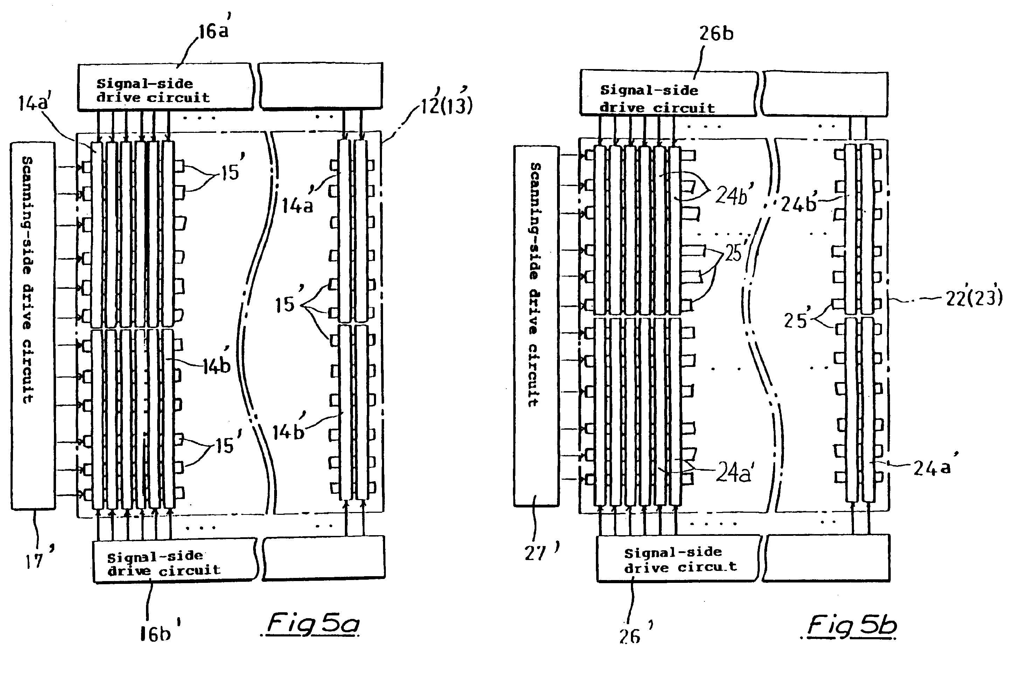

Figs. 4a, 4b, 5a and 5b show another liquid crystal display device of this invention, in which a number of transparent, straight signal electrode lines 14a′, 14a′,... and 14b′, 14b′,... is disposed in the same manner as that of Example 1 on the surface at the side of the liquid crystal layer 11′ of the substrate 12′ upon which light is incident in the liquid crystal panel 10′ at the side towards the light source. The signal electrode lines 14a′, respectively, are disposed to be perpendicular in a parallel manner in the upper area at the side of the liquid crystal layer 11′ of a perpendicular substrate 12′, and the signal electrode lines 14b′, respectively, are disposed to be roughly perpendicular in a parallel manner in the lower area of the substrate 12′ so that the signal electrode lines 14b′ are aligned with the above signal electrode lines 14a′, respectively. Voltage is selectively applied to each of the signal electrode lines 14a′ placed in the upper area of the substrate 12′ by a signal-side drive circuit 16a′ in accordance with a given display. Voltage is also selectively applied to each of the signal electrode lines 14b′ by a signal-side drive circuit 16b′ in accordance with a given display.

A number of transparent, straight scanning electrode lines 15′, 15′,... is disposed in a parallel manner with an appropriate distance therebetween on the entire surface at the side of the liquid crystal layer 11′ of the substrate 13′ placed across the liquid crystal layer 11′ from the substrate 12′ on which the signal electrode lines 14a′ and 14b′ are disposed, so that the scanning electrode lines 15′, 15′,... can intersect the signal electrode lines 14a′ and 14b′ at right angles, resulting in a lattice. The scanning electrode lines 15′, 15′,... form a matrix electrode together with the signal electrode lines 14a′ and 14b′, and the distance between the adjacent scanning electrode lines 15′, 15′, ... is set so that the distance therebetween is slightly larger than the width of each of the scanning electrode lines 15′, 15′,... .

Voltage is selectively applied to the scanning electrode lines 15′ in sequence by a scanning-side drive circuit 17′. Subsequently, voltage is applied to the portions (pixels) of the liquid crystal layer 11′ corresponding to the intersections of given portions of the signal electrode lines 14a′ or 14b′ to which voltage is applied in the substrate 12′ and given portions of the scanning electrode lines 15′ to which voltage is applied in the substrate 13′, so that the light transmitted to the intersection is modulated.

On the other hand, as shown in Fig. 5b, a number of transparent, straight signal electrode lines 24a′, 24a′,... and 24b′, 24b′,... is disposed on the surface at the side of the liquid crystal layer 21′ of the substrate 22′ of the liquid crystal panel 20′ which is at the side towards the screen and which is laminated together with the liquid crystal panel 10′, the substrate 22′ being at the side of the panel 20′ towards the panel 10′. The signal electrode lines 24a′ are disposed to be roughly perpendicular in a parallel manner in the lower area of the perpendicular substrate 12′, and the signal electrode lines 24b′ are disposed to be roughly perpendicular in a parallel manner in the upper area of the substrate 22′ so that the signal electrode lines 24b′ are aligned with the corresponding signal electrode lines 24a′. Voltage is selectively applied by a signal-side drive circuit 26a′ to each of the signal electrode lines 24a′ arranged in the lower area of the substrate 22′ in accordance with a given display. Voltage is selectively applied by a signal-side drive circuit 26b′ to each of the signal electrode lines 24b′ of the substrate 22′ in accordance with a given display.

On the entire surface at the side of the liquid crystal layer 21′ of the substrate 23′ across the liquid crystal layer 21′ from the substrate 22′ on which such signal electrode lines 24a′ and 24b′ are arranged, a number of transparent, straight scanning electrode lines 25′, 25′ ... is arranged in a parallel manner with an appropriate distance therebetween so that these scanning electrode lines 25′, 25′ ... can intersect the signal electrode lines 24a′ and 24b′ to form a lattice. The scanning electrode lines 25′, 25′ ... form a matrix electrode together with the signal electrode lines 24a′ and 24b′ disposed on the substrate 22′ across the liquid crystal layer 21′ from the substrate 23′. Furthermore, as shown in Fig.4b, the scanning electrode lines 25′ are offset from the scanning electrode lines 15′ in that each of the scanning electrode lines 25′, 25′, ... is positioned corresponding to the portion between the adjacent scanning electrode lines 15′, 15′, ... arranged on the substrate 13′ of the liquid crystal panel 10′ at the side towards the light source, so that the scanning electrode lines 25′, 25′, ... are not superposed on these scanning electrode lines 15′, 15′ ... . Voltage is applied to each of the scanning electrode lines 25′ in sequence by the scanning-side drive circuit 27′, and in co-operation with the given signal electrode lines 24a′ or 24b′ to which voltage is applied, voltage is applied to the portions (pixels) of the liquid crystal layer 21′ corresponding to the intersections of the lines 25′ and the lines 24a′ or 24b′, so that the light transmitted through the said portions is modulated.

No scanning electrode line is disposed at a portion of the liquid crystal panel 20′ that faces a portion on which the scanning electrode line 15′ are disposed in the liquid crystal panel 10′ at the side towards the light source, and no scanning electrode line is disposed at a portion of the liquid crystal panel 10′ that faces a portion on which the scanning electrode lines 25′ are disposed in the liquid crystal panel 20′. Therefore, the pixel portions to which voltage is applied in the liquid crystal layers 11′ and 21′ of each of the liquid crystal panel 10′ and 20′ do not overlap each other in the direction of light transmission.

The operation of the above-mentioned liquid crystal display device is the same as that of the liquid crystal display device in Example 1.

As mentioned above, since the pixel portions of the liquid crystal layer 11′ and 21′ to which voltage is applied in the liquid crystal panels 10′ and 20′ do not overlap each other in the direction of light transmission, the non-pixel portions of the liquid crystal layer 11′ or 21′ have the role of compensating for the phase of light at the pixel portions of the other liquid crystal layer 21′ or 11′. The coloration of the transmitted light arising by the birefringence effect produced in the pixel areas at the portion on which the scanning electrode lines 15′ are disposed in the liquid crystal layer 11′ at the side towards the light source is optically compensated by the non-pixel areas of the portions on which the scanning electrode lines 25′ are not arranged at the liquid crystal layer 21′ at the side towards the screen. In the same way, the transmitted light whose colouring is optically compensated by the birefringence effect in the non-pixel areas of the portions on which the scanning electrode lines 15′ are not disposed in the liquid crystal layer 11′ is transmitted through the pixel areas of the portions where the scanning electrode lines 25′ are disposed in the liquid crystal layer 21′ at the side towards the screen. As a result, the enhancement of the pixel density is attained and the lowering of image contrast is prevented. Moreover, high quality images having a high resolving power and a high contrast ratio are projected onto the screen under magnification.

Also, since the straight scanning electrode lines 15′ and 25′ are arranged in a parallel manner so that they do not overlap in the liquid crystal panels 10′ and 20′ as mentioned above, the distance interval between the adjacent scanning electrode lines 15′ and the distance between the adjacent scanning electrode lines 25′ can be set to be sufficiently large on the liquid crystal panels 10′ and 20′, respectively. Although the pixel density is enhanced by increasing the number of scanning electrode lines, it is easy to form the electrode lines, and furthermore, it is easy to connect the drive circuits to the electrode lines.

Although in the above-mentioned example only the scanning electrode lines in each liquid crystal panel are arranged with a distance therebetween corresponding to the width of each scanning electrode line in the direction of arrangment, this invention is applicable to a liquid crystal device in which a pair of scanning electrode lines arranged without any distance therebetween in each liquid crystal panel and each of the said pairs of the scanning electrode lines is arranged with a set distance from the adjacent pair of scanning electrode lines, said distance corresponding to the width of the pair of scanning electrode lines. Each pair of scanning electrode lines in one liquid crystal panel is positioned corresponding to the portion between the adjacent pairs of scanning electrode lines in the other liquid crystal panel that is laminated on the one liquid crystal panel.

Although the above-mentioned liquid crystal display element is composed of a double layered display panel, this invention is applicable to a lamination of three or more liquid crystal panels, each of which is provided with signal electrode lines of a matrix structure and scanning electrode lines of a matrix structure. These panels are laminated so that the scanning electrode lines do not overlap in the direction of light transmission. In this case, each liquid crystal panel is independently provided with scanning electrode lines and the pixel portions do not overlap each other in the direction of light transmission, and accordingly, it is possible to increase the display capacity with an increase in the number of sets of the liquid crystal panels, without increasing the number of the scanning electrode lines. The scanning electrode lines in each liquid crystal panel are arranged, for example, with a set distance that is two or more times the width of one scanning electrode line between the adjacent scanning electrode lines when the liquid crystal display element is composed of a three-layered liquid crystal panel, so that the scanning electrode lines in each liquid crystal panel cannot be superposed in the direction of light transmission.

### Example 3

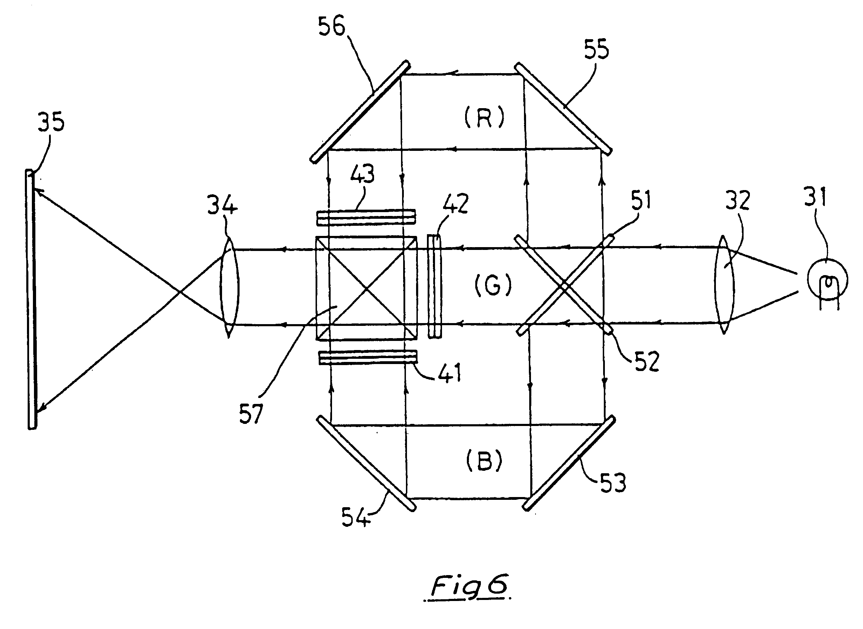

The invention is applicable to a liquid crystal display device for attaining a colour display. As shown in Fig. 6, light form a light source 31 is rendered parallel by a light-converging lens 32 and incident upon a blue-light reflection type dichroic mirror 51 and a red-light reflection type dichroic mirror 52, so that the light is decomposed into three colours; a blue light (B); a red light (R) and a green light (G). Green light (G), which is transmitted through both the mirrors 51 and 52, is incident upon a dichroic prism 57 through a liquid crystal display element 42, and blue light (B), which is reflected by the dichroic mirror 51 at right angles to the mirror 51, is directed by reflection mirrors 53 and 54 to a dichroic prism 57 through a liquid crystal display element 41. Red light (R), which is reflected by the dichroic mirror 52 at right angles to the mirror 51, is directed by reflection mirrors 55 and 56 to the dichroic prism 57 through a liquid crystal display element 43.

The liquid crystal display elements 41, 42 and 43 have the same configuration as that of the liquid crystal display element 1 of Example 1 and that of the liquid crystal display element 1′ of Example 2 and have the same function as those of the elements 1 and 1′. The coloured light rays, which have been incident upon the dichroic prism 57 through the respective liquid crystal display elements 41 through 43 are recombined or synthesized by the dichroic prism 57 and are projected onto the screen 35 resulting in a desired colored image on the screen 35.

Various other modifications can be readily made without departing from the scope of the claims.

## Claims

1. A projection type liquid crystal display device comprising a liquid crystal display element having two liquid crystal panels (10,20) arranged in a laminated fashion such that incident light passes through adjacent panels consecutively, each said liquid crystal panel (10,20) having a supertwisted nematic type liquid crystal layer (11,21), one (10) of which has two pluralities of parallel electrode lines (14,15) disposed either side of its liquid crystal layer (11) in a latticed manner so as to form pixels, and voltage applying means for selectively applying voltage to said electrode lines to selectively modulate light transmitted through said liquid crystal layer at each pixel, wherein the rotation direction of twist of the liquid crystal layer in a first liquid crystal panel (10) is opposite to that of twist of the liquid crystal layer in a second liquid crystal panel (20) adjacent to said first liquid crystal panel; the orientation of the liquid crystal molecules of the liquid crystal layer in the first panel (10) in the vicinity of the liquid crystal layer in the second panel (20) is intersected at right angles to that of the liquid crystal layer in the second panel (20) in the vicinity of the liquid crystal layer in the first panel (10), said rotation directions of twist and liquid crystal molecule orientations being such as to perform birefringence compensation substantially; characterised in that the second liquid crystal panel (20) also has two pluralities of parallel electrode lines (24,25) disposed either side of its liquid crystal layer (21) in a latticed manner, one of said pluralities of parallel electrode lines (15) of the first panel (10) is parallel to one of said pluralities of parallel electrode lines (25) in the second panel (20), and the electrode lines of said one plurality of parallel electrode lines (15) in the first panel (10) are not superposed on the electrode lines of said one plurality of parallel electrode lines (25) in the second panel (20) in the direction in which incident light passes through said liquid crystal panels (10,20).

2. A projection type liquid crystal display device according to claim 1, wherein said electrode lines (15,25)disposed so as not to be superposed are closely arranged only in a given area in each panel (10,20).

3. A projection type liquid crystal display device according to claim 1, wherein each of the electrode lines (15′) in the first liquid crystal panel (10′) is positioned corresponding to the portion between the adjacent electrode lines (25′) of the second liquid crystal panel (20′) so that the electrode lines (15′) in the first liquid crystal panel are not superposed on the corresponding electrode lines (25′) of the second liquid crystal panel.

4. A projection type liquid crystal display device according to claim 1, 2 or 3, which is provided with only a single liquid crystal display element arranged so as to constitute a monochromatic display.

5. A projection type liquid display device according to claim 1, 2 or 3, which is provided with three liquid crystal display elements arranged so as to constitute a colour display.

6. A projection type liquid crystal display device according to any preceding claim, wherein the electrode lines of the remaining said pluralities of electrode lines (14,24) are transverse to those (15,25) which are not superposed and are in respective sets over different areas of the panels (10,20).

7. A projection type liquid crystal display device according to any preceding claim, wherein one or more further liquid crystal panels are also arranged in a laminated fashion with said first and second liquid crystal panels, the rotation directions of twist and liquid crystal molecules orientations of said one or more further liquid crystal panels also being such as to perform birefringence compensation, said one or more further liquid crystal panels each having further pluralities of parallel electrode lines arranged so that none of said further pluralities of parallel electrode lines are superposed on any other of said further pluralities of parallel electrode lines nor on any of said first or second pluralities of parallel electrode lines in said first and second panels.

## Patentansprüche

1. Flüssigkristall-Anzeigevorrichtung vom Projektionstyp mit einem Flüssigkristall-Anzeigeelement mit zwei Flüssigkristalltafeln (10, 20), die auf laminierte Weise so angeordnet sind, daß einfallendes Licht aufeinanderfolgend durch die benachbarten Tafeln läuft, wobei jede Flüssigkristalltafel (10, 20) eine superverdrillt-nematische Flüssigkristallschicht (11, 21) aufweist, von denen die eine (10) zwei Mengen paralleler Elektrodenleitungen (14, 15) aufweist, die auf beiden Seiten der Flüssigkristallschicht (11) in Gitterweise so angeordnet sind, daß Pixel gebildet werden, und mit einer Spannungsanlegeeinrichtung zum selektiven Anlegen von Spannung an die Elektrodenleitungen, um durch die Flüssigkristallschicht hindurchgestrahltes Licht an jedem Pixel selektiv zu modulieren, wobei die Verdrillungsrichtung der Flüssigkristallschicht in der ersten Flüssigkristalltafel (10) zur Verdrillungsrichtung der Flüssigkristallschicht in der zweiten Flüssigkristalltafel (20) entgegengesetzt ist, die an diese erste Flüssigkristalltafel angrenzt; wobei die Richtung der Flüssigkristallmoleküle in der Flüssigkristallschicht der ersten Tafel (10) in der Nähe der Flüssigkristallschicht der zweiten Tafel (20) rechtwinklig zu derjenigen der Flüssigkristallschicht in der zweiten Tafel (20) in der Nähe der Flüssigkristallschicht in der ersten Tafel (10) liegt, wobei die Verdrillungsrichtungen und die Flüssigkristallmolekül-Ausrichtungen dergestalt sind, daß im wesentlichen Doppelbrechungskompensation ausgeführt wird; **dadurch gekennzeichnet, daß** die zweite Flüssigkristalltafel (20) auch mehrere parallele Elektrodenleitungen (24, 25) aufweist, die auf beiden Seiten ihrer Flüssigkristallschicht (21) in Gitterform angeordnet sind, wobei die eine Menge paralleler Elektrodenleitungen (15) der ersten Tafel (10) zu einer der Mengen paralleler Elektrodenleitungen (25) in der zweiten Tafel (20) parallel ist und die Elektrodenleitungen der anderen Menge paralleler Elektrodenleitungen (15) in der ersten Tafel (10) nicht mit den Elektrodenleitungen der einen Menge paralleler Elektrodenleitungen (25) in der zweiten Tafel (20) in der Richtung überlagert sind, in der einfallendes Licht durch diese Flüssigkristalltafeln (10, 20) läuft.

2. Flüssigkristall-Anzeigevorrichtung vom Projektionstyp nach Anspruch 1, bei der die Elektrodenleitungen (15, 25), die so angeordnet sind, daß sie nicht übereinanderliegen, nur in einem vorgegebenen Bereich in jeder Tafel (10, 20) eng beieinander angeordnet sind.

3. Flüssigkristall-Anzeigevorrichtung vom Projektionstyp nach Anspruch 1, bei der jede der Elektrodenleitungen (15′) in der ersten Flüssigkristalltafel (10′) entsprechend dem Abschnitt zwischen benachbarten Elektrodenleitungen (25′) der zweiten Flüssigkristalltafel (20′) so angeordnet ist, daß die Elektrodenleitungen (15′) in der ersten Flüssigkristalltafel nicht mit den entsprechenden Elektrodenleitungen (25′) der zweiten Flüssigkristalltafel überlagert sind.

4. Flüssigkristall-Anzeigevorrichtung vom Projektionstyp nach einem der Ansprüche 1, 2 oder 3, die mit nur einem einzigen Flüssigkristall-Anzeigeelement versehen ist, das so ausgebildet ist, daß es eine einfarbige Anzeige bildet.

5. Flüssigkristall-Anzeigevorrichtung vom Projektionstyp nach einem der Ansprüche 1, 2 oder 3, das mit drei Flüssigkristall-Anzeigeelementen versehen ist, die so angeordnet sind, daß eine Farbanzeige gebildet wird.

6. Flüssigkristall-Anzeigevorrichtung vom Projektionstyp nach einem der vorstehenden Ansprüche, bei der die Elektrodenleitungen der anderen Menge von Elektrodenleitungen (14, 24) quer zu denjenigen (15, 25) verlaufen, die nicht überlagert sind, und sie in jeweiligen Sätzen in verschiedenen Bereichen der Tafeln (10, 20) liegen.

7. Flüssigkristall-Anzeigevorrichtung vom Projektionstyp nach einem der vorstehenden Ansprüche, bei der eine weitere Flüssigkristalltafel oder mehrere ebenfalls auf laminierte Weise mit der ersten und zweiten Flüssigkristalltafel angeordnet sind, wobei die Verdrillungsrichtungen und die Flüssigkristallmolekül-Ausrichtungen der einen weiteren Flüssigkristalltafel oder der mehreren ebenfalls dergestalt sind, daß Doppelbrechungskompensation erzielt wird, wobei die eine weitere Flüssigkristalltafel oder die mehreren jeweils weitere Mengen paralleler Elektrodenleitungen aufweisen, die so angeordnet sind, daß keine der weiteren Mengen paralleler Elektrodenleitungen mit irgendeiner anderen der weiteren Mengen paralleler Elektrodenleitungen noch mit der ersten oder zweiten Menge paralleler Elektrodenleitungen in der ersten und zweiten Tafel überlagert ist.

## Revendications

1. Dispositif d'affichage à cristal liquide de type à projection comprenant un élément d'affichage à cristal liquide ayant deux panneaux à cristal liquide (10, 20) disposés de façon stratifiée de telle manière qu'une lumière incidente passe à travers les panneaux adjacents de façon consécutive, chacun desdits panneaux à cristal liquide (10, 20) ayant une couche de cristal liquide de type nématique supertorsadé (11, 21), l'un (10) d'entre eux ayant deux pluralités de lignes d'électrodes parallèles (14, 15) disposées d'un côté et de l'autre de sa couche de cristal liquide (11) de façon grillagée de sorte à former des pixels, et des moyens d'application de tension pour appliquer de façon sélective une tension auxdites lignes d'électrodes afin de moduler de façon sélective une lumière transmise à travers ladite couche de cristal liquide au niveau de chaque pixel, dans lequel la direction de rotation de torsion de la couche de cristal liquide dans un premier panneau à cristal liquide (10) est opposée à celle de la torsion de la couche de cristal liquide dans un second panneau à cristal liquide (20) adjacent audit premier panneau à cristal liquide; l'orientation des molécules de cristal liquide de la couche de cristal liquide dans le premier panneau (10) aux environs de la couche de cristal liquide dans le second panneau (20) est en intersection à angles droits avec celle de la couche de cristal liquide dans le second panneau (20) aux environs de la couche de cristal liquide dans le premier panneau (10), lesdites directions de rotation de torsion et lesdites orientations des molécules de cristal liquide étant prévues de telle manière à effectuer sensiblement une compensation par biréfringence; caractérisé en ce que le second panneau à cristal liquide (20) comprend également deux pluralités de lignes d'électrodes parallèles (24, 25) disposées d'un côté et de l'autre de sa couche de cristal liquide (21) de manière grillagée, l'une desdites pluralités de lignes d'électrodes parallèles (15) du premier panneau (10) est parallèle à l'une desdites pluralités de lignes d'électrodes parallèles (25) dans le second panneau (20), et les lignes d'électrodes de ladite une pluralité de lignes d'électrodes parallèles (15) dans le premier panneau (10) ne sont pas superposées sur les lignes d'électrodes de ladite une pluralité de lignes d'électrodes parallèles (25) dans le second panneau (20) dans la direction dans laquelle une lumière incidente passe à travers lesdits panneaux à cristal liquide (10, 20).

2. Dispositif d'affichage à cristal liquide de type à projection selon la revendication 1, dans lequel lesdites lignes d'électrodes (15, 25) disposées de sorte à ne pas être superposées sont organisées de façon rapprochée uniquement dans une zone donnée dans chaque panneau (10, 20).

3. Dispositif d'affichage à cristal liquide de type à projection selon la revendication 1, dans lequel chacune des lignes d'électrodes (15′) dans le premier panneau à cristal liquide (10′) est située en correspondance avec la portion entre les lignes d'électrodes adjacentes (25′) du second panneau à cristal liquide (20′) de sorte que les lignes d'électrodes (15′) dans le premier panneau à cristal liquide ne sont pas superposées sur les lignes d'électrodes correspondantes (25) du second panneau à cristal liquide.

4. Dispositif d'affichage à cristal liquide de type à projection selon la revendication 1, 2 ou 3, prévu avec uniquement un seul élément d'affichage à cristal liquide disposé de façon à constituer un afficheur monochrome.

5. Dispositif d'affichage à cristal liquide de type à projection selon la revendication 1, 2 ou 3, prévu avec trois éléments d'affichage à cristal liquide disposés de façon à constituer un afficheur couleur.

6. Dispositif d'affichage à cristal liquide de type à projection selon l'une quelconque des revendications précédentes, dans lequel les lignes d'électrodes parmi les restantes desdites pluralités de lignes d'électrodes (14, 24) sont transversales à celles (15, 25) qui ne sont pas superposées et sont dans des ensembles respectifs sur des zones différentes des panneaux (10, 20).

7. Dispositif d'affichage à cristal liquide de type à projection selon l'une quelconque des revendications précédentes, dans lequel un ou plusieurs panneaux à cristal liquide supplémentaires sont également disposés de façon stratifiée avec lesdits premier et second panneaux à cristal liquide, les directions de rotation de torsion et les orientations des molécules de cristal liquide desdits un ou plusieurs panneaux à cristal liquide supplémentaires étant également prévues de telle manière à effectuer une compensation par biréfringence, lesdits un ou plusieurs panneaux à cristal liquide supplémentaires ayant chacun des pluralités de lignes d'électrodes parallèles supplémentaires disposées de façon qu'aucune desdites pluralités de lignes d'électrodes parallèles supplémentaires n'est superposée sur une autre pluralité quelconque desdites pluralités de lignes d'électrodes parallèles supplémentaires ni sur aucune desdites première ou seconde pluralités de lignes d'électrodes parallèles dans lesdites premier et second panneaux.
